# EUROPEAN PATENT SPECIFICATION

(11) **EP 3 600 725 B1**
(45) Date of publication and mention of the grant of the patent: **23.06.2021**
(21) Application number: 17715107.3
(22) Date of filing: 31.03.2017
(51) Int. Cl.: B33Y 30/00, B33Y 10/00, B29C 64/214, B29C 64/205, B22F 10/31, B22F 10/28

(54) **METHOD AND APPARATUS FOR FORMING A THREE-DIMENSIONAL ARTICLE**
VERFAHREN UND VORRICHTUNG ZUR HERSTELLUNG EINES DREIDIMENSIONALEN ARTIKELS
PROCÉDÉ ET APPAREIL DE FORMATION D'UN ARTICLE TRIDIMENSIONNEL

(43) Date of publication of application: 05.02.2020
(73) Proprietor: ARCAM AB, 43137 Mölndal (SE)
(72) Inventor: LJUNGBLAD, Ulric, 431 38 Mölndal (SE)
(74) Representative: Hafner & Kohl PartmbB
(86) International application number: PCT/EP2017/057667
(87) International publication number: WO 2018/177531

(56) References cited:
- WO-A1-2017/050546
- US-B1- 9 406 483

## Description

### BACKGROUND

### Technical Field

The present invention relates to an apparatus for forming at least one three-dimensional article by fusing powder layer by layer.

### Description of Related Art

Freeform fabrication or additive manufacturing is a method for forming three-dimensional articles through successive fusion of chosen parts of powder layers applied to a worktable.

Such an apparatus may comprise a work table on which the three-dimensional article is to be formed, a powder dispenser, arranged to lay down a thin layer of powder on the work table for the formation of a powder bed, an energy beam for delivering energy to the powder whereby fusion of the powder takes place, elements for control of the energy given off by the energy beam over the powder bed for the formation of a cross section of the three-dimensional article through fusion of parts of the powder bed, and a controlling computer, in which information is stored concerning consecutive cross sections of the three-dimensional article. A three-dimensional article is formed through consecutive fusions of consecutively formed cross sections of powder layers, successively laid down by the powder dispenser.

In order to melt the powder material at specific location for achieving desired material characteristics there is a need to inter alia verify the size and shape of the electron beam spot. One needs to know that different power levels of the energy beam at different positions corresponds to the desired beam spot sizes and beam spot shapes.

Presently an electron beam may be optically calibrated by using the glow of the material. Such calibration method has several drawbacks. Firstly, it is time consuming since it takes some time until the metal starts to glow. Secondly it requires a relatively high beam power for starting the metal to glow. Thirdly, the metal which has been glowing may have been locally damaged or at least changed in material characteristics. And lastly, the optical equipment used for the calibration may get a metallization coating during the calibration process or in a later process step.

In US 9406483 a solution to the above mentioned problem is disclosed. In said patent a patterned aperture resolver and a patterned aperture modulator is arranged between an X-ray detector and the powder material which is to be melted. The drawback with this method is that the distance between said powder surface, said modulator and said resolver need to be very accurate which means that said system may be expensive and/or may have a limited temperature interval in which it has a required accuracy.

WO 2017/050546 A1 discloses an X-ray standard reference object for calibrating a scanning electron beam in an additive manufacturing apparatus.

In view of the above and other considerations, there is thus a need in the art for a simple and effective method for calibrating/verifying the beam spot size and shape compared to the state of the art.

### BRIEF SUMMARY

An object of the invention is to provide a method and an apparatus for forming three dimensional articles by fusing powder layer by layer which solves the above mentioned need in the art.

In a first aspect of the present invention the abovementioned object is achieved by the features of the apparatus claimed herein.

According to various embodiments, the present invention provides an apparatus for forming at least one three-dimensional article through successive fusion of parts of a powder bed, which parts corresponds to successive cross sections of the three-dimensional article, said apparatus comprising: a powder distributor configured for evenly distributing a layer of powder on top of a work table provided inside a vacuum chamber; and an electron beam source emanating an electron beam configured for fusing the powder layer in selected locations corresponding to said cross section of the three-dimensional article, wherein: said powder distributor being an elongated rod provided movable at a predetermined distance above the powder bed and with its central axis in parallel with a top surface of said work table, wherein at least one sensor is provided on said powder distributor facing towards said electron beam source, wherein said at least one sensor is at least one metal plate comprising at least one opening, at least one detector for detecting x-rays and/or secondary electrons sent out from said sensor when said sensor is interacting with said electron beam. In another aspect of the present invention it is provided a method for forming at least one three-dimensional article through successive fusion of parts of a powder bed, which parts correspond to successive cross sections of the three-dimensional article.

An advantage of the present invention is that the calibration and/or verification of the electron beam may be performed during the manufacturing of the three-dimensional article which is not possible with the prior art technique.

In various example embodiments of the present invention a hollow pattern is provided in said opening in said sensor.

An advantage of this example embodiment is that the electron beam may be calibrated/verified in more detail.

In various example embodiments of the present invention said hollow pattern is made of a material with a higher atomic number compared to the plate.

An advantage of this example embodiment is that material with higher atomic number is more resistant to prolonged impingement of electron beam and also gives a characteristic different signal when interacting with the electron beam compared to the when said plate is interacting with said electron beam.

In various example embodiments of the present invention said sensor may be directly attached to the top surface of said powder distributor or attached at a predetermined distance from the top surface of said powder distributor.

An advantage of this example embodiments is that the distance between the top surface of the powder layer and said sensor is independent of the functionality of the present invention. As long as said distance between said top surface of said powder layer and said sensor is known it can be compensated for to achieve the desired properties of the electron beam at said top surface of said powder layer.

In various example embodiments of the present invention said plate is made of a different material compared to said powder distributor.

An advantage of this embodiment is that it is easier and quicker to distinguish a signal emanating from the powder distributor as such and the sensor.

In various example embodiment of the present invention said sensor is arranged movable along the central axis of said powder distributor.

An advantage of this example embodiment is that one single sensor may be arranged to cover the full area of the powder bed in order to be able to calibrate/verify the electron beam at any position of the powder bed by moving said powder distributor and said sensor to predetermined positions.

In another aspect of the present invention it is provided a method for forming at least one three-dimensional article through successive fusion of parts of a powder bed, which parts correspond to successive cross sections of the three-dimensional article, said method comprising the steps of: distributing evenly a layer of powder on top of a work table with a powder distributor; applying an electron beam for fusing the layer of powder in selected locations corresponding to said cross section of the three-dimensional article; and detecting with at least one detector x-rays and/or secondary electrons emanating from an interaction of said electron beam with a sensor attached to said powder distributor, wherein said sensor is a metal plate comprising at least one opening facing towards said electron beam source.

An advantage of the present invention is that the calibration and/or verification of the electron beam may be performed during the manufacturing of the three-dimensional article which is not possible with the prior art technique.

In various example embodiments of the present invention said x-rays and/or said secondary electrons emanating from an interaction of said electron beam with said at least one sensor are detected while said powder distributor is moving.

An advantage of this embodiment is that the control of the final product is improved compared to prior art technique because one may control during the manufacture the quality of the electron beam, i.e., compare the size, shape and position of the detected electron beam with reference data and in case of any discrepancies adjustments may be performed.

### BRIEF DESCRIPTION OF SEVERAL VIEWS OF THE DRAWINGS

Various embodiments of the invention will be further described in the following, in a non-limiting way with reference to the accompanying drawings. Same characters of reference are employed to indicate corresponding similar parts throughout the several figures of the drawings:
Figure 1a depicts an example embodiment of a top view of a build chamber and a first and second powder container at either side of said build chamber and a powder distributor provided with two sensors;
Figure 1b depicts a side view of the powder distributor in figure 1a;
Figure 1c depicts a side view of the additive manufacturing setup in figure 1a;
Figure 2a-2c depicts three different example embodiments of sensors;
Figure 3 depicts a schematic figure of an additive manufacturing apparatus;

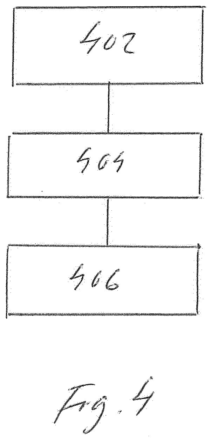

Figure 4 depicts schematically a flow chart of the method according to the present invention;
Figure 5 depicts a schematic side view of an example embodiment of an additive manufacturing powder distribution system.

### DETAILED DESCRIPTION OF VARIOUS EMBODIMENTS

To facilitate the understanding of various embodiments of the present invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

The term "three-dimensional structures" and the like as used herein refer generally to intended or actually fabricated three-dimensional configurations (e.g. of structural material or materials) that are intended to be used for a particular purpose. Such structures, etc. may, for example, be designed with the aid of a three-dimensional CAD system.

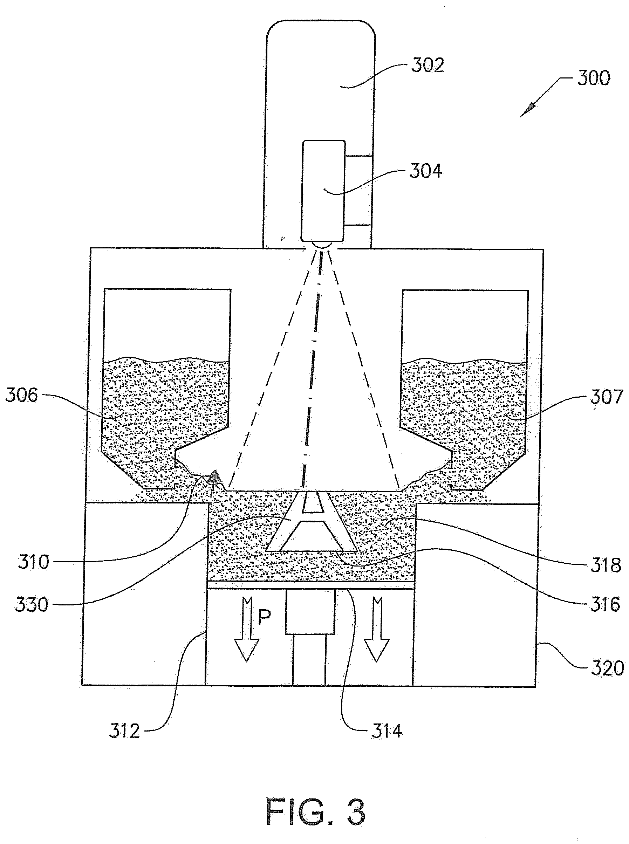

Figure 3 depicts an example embodiment of a freeform fabrication or additive manufacturing apparatus 300 according to of the present invention. Said apparatus 300 comprising an electron gun 302; a detector 304; two powder hoppers 306, 307; a start plate 316; a build tank 312; a powder distributor 310; a build platform 314; and a vacuum chamber 320.

The vacuum chamber 320 is capable of maintaining a vacuum environment by means of a vacuum system, which system may comprise a turbomolecular pump, a scroll pump, an ion pump and one or more valves which are well known to a skilled person in the art and therefore need no further explanation in this context. The vacuum system is controlled by a control unit.

The electron gun 302 is generating an electron beam which is used for melting or fusing together powder material 318 provided on the start plate 316. A control unit may be used for controlling and managing the electron beam emitted from the electron beam gun 302. At least one focusing coil (not shown), at least one deflection coil (not shown), an optional astigmatism coil (not shown) and an electron beam power supply (not shown) may be electrically connected to said control unit (not shown). In an example embodiment of the invention said electron gun 302 generates a focusable electron beam with an accelerating voltage of about 60kV and with a beam power in the range of 0-10kW. The pressure in the vacuum chamber may be in the range of 1x10⁻³-10⁻⁶ mBar when building the three-dimensional article by fusing the powder layer by layer with the energy beam.

The powder hoppers 306, 307 comprise the powder material to be provided on the start plate 316 in the build tank 312. The powder material may for instance be pure metals or metal alloys such as titanium, titanium alloys, aluminum, aluminum alloys, stainless steel, Co-Cr-W alloy, etc.

The powder distributor 310 is arranged to lay down a thin layer of the powder material on the start plate 316. During a work cycle the build platform 314 will be lowered successively in relation to the electron gun 302 after each added layer of powder material. In order to make this movement possible, the build platform 314 is in one embodiment of the invention arranged movably in vertical direction, i.e., in the direction indicated by arrow P. This means that the build platform 314 starts in an initial position, in which a first powder material layer of necessary thickness has been laid down on said start plate 316. The build platform is thereafter lowered in connection with laying down a new powder material layer for the formation of a new cross section of a three-dimensional article. Means for lowering the build platform 314 may for instance be through a servo engine equipped with a gear, adjusting screws etc.

A model of said three-dimensional article may be generated via a CAD (Computer Aided Design) tool.

In an example embodiment of a method according to the present invention for forming a three-dimensional article through successive fusion of parts of a powder bed, which parts corresponds to successive cross sections of the three-dimensional article, comprising a first step 402 of distributing evenly a layer of powder on top of a work table 314 with a powder distributor 310.

Powder may be distributed evenly over the work table 314 according to several methods. One way to distribute the powder is to collect material fallen down from the hopper 306, 307 by a powder distributor 310. The powder distributor 310 is moved over the build tank 312 thereby distributing the powder over the work table 314 or in case where a start plate 316 is used over the start plate 316. The distance between a lower part of the powder distributor 310 and the upper part of the start plate 316 or previous powder layer determines the thickness of powder distributed over the start plate 316. The powder layer thickness can easily be adjusted by adjusting the height of the work table 314.

In a second step 404 an electron beam is applied for fusing the layer of powder in selected locations corresponding to said cross section of the three-dimensional article. The electron beam may be directed over said start plate 316 causing said first powder layer to fuse in selected locations to form a first cross section of said three-dimensional article. The electron beam is directed over said start plate 316 from instructions given by a control unit (not shown). In the control unit instructions for how to control the electron beam gun for each layer of the three-dimensional article may be stored.

After a first layer is finished, i.e., the fusion of powder material for making a first layer of the three-dimensional article, a second powder layer is provided on said start plate 316. The second powder layer is preferably distributed according to the same manner as the previous layer. However, there might be alternative methods in the same additive manufacturing machine for distributing powder onto the work table. For instance, a first layer may be provided by means of a first powder distributor, a second layer may be provided by another powder distributor. The design of the powder distributor is automatically changed according to instructions from the control unit. A powder distributor in the form of a single rake system, i.e., where one rake is catching powder fallen down from both a left powder hopper 306 and a right powder hopper 307, the rake as such can change design.

After having distributed the second powder layer on the start plate 316, the electron beam is directed over start plate 316 causing said second powder layer to fuse in selected locations to form a second cross section of said three-dimensional article 330. Fused portions in the second layer may be bonded to fused portions of said first layer. The fused portions in the first and second layer may be melted together by melting not only the powder in the uppermost layer but also remelting at least a fraction of a thickness of a layer directly below said uppermost layer.

It may be necessary to consider the charge distribution that is created in the powder as the electrons hit the powder bed 318. The charge distribution density depends on the following parameters: beam current, electron velocity (which is given by the accelerating voltage), beam scanning velocity, powder material and electrical conductivity of the powder, i.e. mainly the electrical conductivity between the powder grains. The latter is in turn a function of several parameters, such as temperature, degree of sintering and powder grain size/size distribution.

Thus, for a given powder, i.e. a powder of a certain material with a certain grain size distribution, and a given accelerating voltage, it is possible, by varying the beam current (and thus the beam power) and the beam scanning velocity, to affect the charge distribution.

By varying these parameters in a controlled way, the electrical conductivity of the powder can gradually be increased by increasing the temperature of the powder. A powder that has a high temperature obtains a considerably higher conductivity which results in a lower density of the charge distribution since the charges quickly can diffuse over a large region. This effect is enhanced if the powder is allowed to be slightly sintered during the pre-heating process. When the conductivity has become sufficiently high, the powder can be fused together, i.e. melted or fully sintered, with predetermined values of the beam current and beam scanning velocity.

In a third step of 406 a signal emanating from an interaction of said electron beam with a sensor 150a, 150b, 250 attached to said powder distributor may be detected. Before/after fusing, during fusion and/or during powder distribution, at least one first signal may be captured by said detector 304 provided inside or outside the vacuum chamber 320. The detector 304 is a secondary electron detector or an x-ray detector.

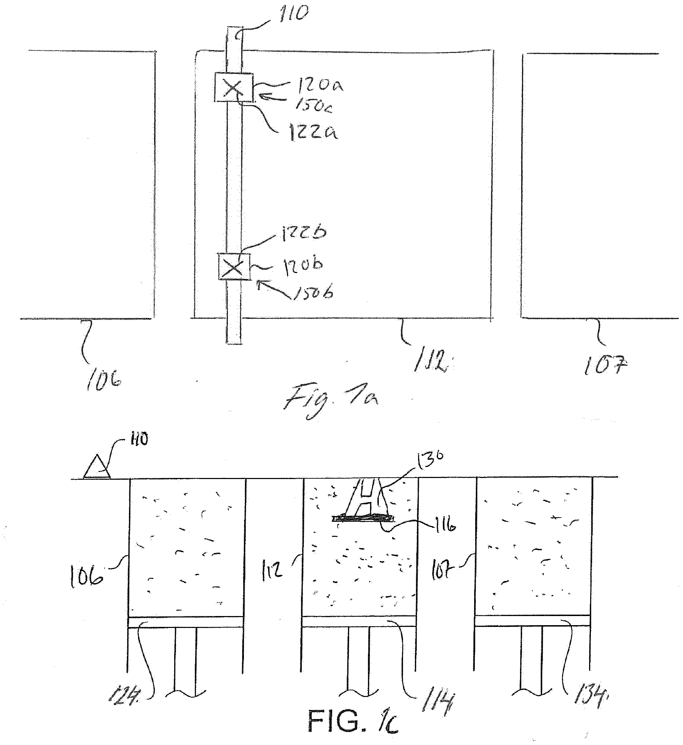

The sensor 150a, 150b, 250 may in combination with the detector 304 be used to calibrate/validate the shape and size of an electron beam in an additive manufacturing apparatus 300. The sensor(s) 150a, 150b, 250 may be arranged on top the powder distributor 110. Figure 1a depicts a top view of a first example embodiment of a powder distributor 110 with a two sensors 120a, 120b. The powder distributor is here exemplified as being situated over the build chamber 112. To the left and right is arranged a first powder container 106 and a second powder container 107. A side view of this embodiment is depicted in figure 1c where it is also shown the work table (fabrication piston) 114 in said build chamber 112 and powder delivery pistons 124, 134 in said first and second powder container respectively. A predetermined amount of powder to be distributed over said work table 114 may be collected from either the first or second powder container 106, 107 respectively by raising the powder delivery pistons 124 or 134 a predetermined height. The powder distributor 110 may then collect the powder which is available to be raked of from either one of the powder containers and distributed over the work table 114 in said build chamber. A three-dimensional article 130 is illustrated to be built on a start plate 116 in figure 1c.

The sensors 150a, 150b are fixed in position to the powder distributor 110. Alternatively, one or more sensors 150a, 150b, 250 may be arranged movable on said powder distributor. The movement of said sensors may be along a central axis of said powder distributor 110 and/or perpendicular to said powder distributor 110.

The electron beam may be swept over the sensor 150a, 150b, 250 and an X-ray detector and/or a secondary electron detector may be used for collecting x-ray signals and/or secondary electrons generated from the sensor as the electron beam sweeps over it.

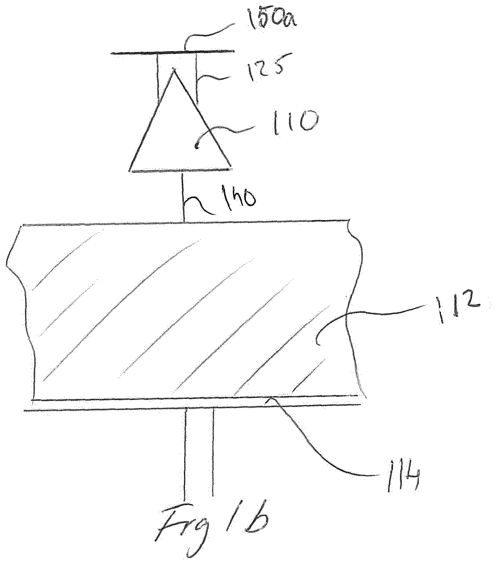

The sensor may either be directly attached to the top surface of said powder distributor or as depicted in figure 1b at a distance from said powder distributor 110. In figure 1b the sensor 150a is attached to said powder distributor 110 via spacing elements 125 which may be in the form of a plurality of bars.

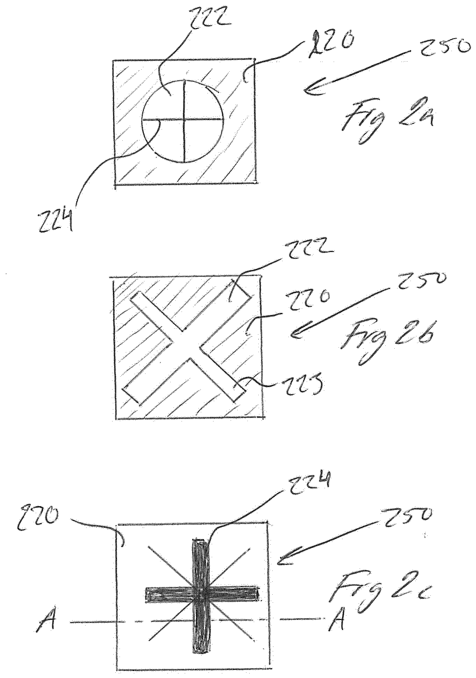

Figure 2a-2c illustrates three different example embodiments of a sensor 150a, 150b, 250. Said sensor may be in the form of a metal plate 220 comprising for instance a well-defined hole 222. By analyzing the X-ray signal and/or secondary electrons as the electron beam is sweeping over the sensor 150a, 150b, 250 one may determine the shape and/or size of the electron beam. Inside said hole 222 a hollow pattern 224 may be arranged. Said hollow pattern 224 may be made of a metal material having an atom number which is higher than the plate 220. For instance, said plate 220 may be made of aluminum or stainless steel and said predetermined hollow pattern 224 may be made of copper or tungsten. The spot size of the electron beam is typically smaller than the hollow portions of the predetermined pattern 224. As the electron beam is swept over a given hole 222 one can determine the edge of the hole 222 and the edge of the predetermined pattern as distinct signals. As the dimension of the hole(s) 222 and the predetermined hollow pattern 224 is known beforehand with high accuracy, one can from a given sweeping pattern determine the shape, position and scanning speed of the electron beam. Calibration parameters may be stored in a look-up table for use when manufacturing three-dimensional objects.

The beam characterization method that may be used is the "knife edge beam profiling method". When an electron beam hits the edge material (edge of the predetermined pattern), x-ray photons and/or secondary electrons are generated and detected by the detector 304. The signal from the detector 304 as the beam is swept over the edge of the predetermined pattern may be recorded by an oscilloscope. The shape of the detected signal may then be translated to a beam diameter, beam shape and beam position. A position of the individual holes may be determined from a SEM image. The beam may then be swept over a predetermined hole 20 from left to right. When a first line is exposed a new scan starts with a predetermined shift in a vertical direction. The predetermined shift may be 0.2mm. The procedure is repeated until the full predetermined pattern 224 is covered. The signal from the X-ray detector and/or secondary electron detector is recorded continuously by the oscilloscope from the first to the last scan line.

The beam size and position calibration exposure procedure is dependent on heat distribution and dissipation. Since exposing one single calibration site at a time would generate too much heat in the predetermined pattern 224 so that the material most probably will deteriorate. However, if several calibration sites (holes) are exposed in one single loop the heat generated in the predetermined pattern 224 will have to dissipate. From the detected oscilloscope signal it is possible, if enough samples are acquired, to determine the size, shape and position of the electron beam. The scan signal is basically the derivative of the corresponding Gaussian beam profile. The knife edge method optimizes an error function to the scan data by fitting the erf(r, a), where r is the 1/e² radius and "a" is the flank position.

Because the passive detector is provided on a different level than the top surface of the powder material which said electron beam is to melt, said calibration/verification may need to be compensated for said height difference, i.e., the detected signal from said sensor should be compensated for the "out of focus" of the electron beam when said beam hits the sensor since said sensor is on a different z-height compared to the top surface of the powder layer which is to be melted in an additive manufacturing process. It is on the top surface of said powder layer said electron beam need to be optimized, not at the height of said sensor.

In case the calibration/verification of the electron beam is performed while said powder distributor and/or the sensor is moving a synchronization of said movement of said powder distributor/sensor and said electron beam need to be done. Alternatively said calibration/verification is performed at predetermined fixed places where said powder distributor is standing still.

If the detected electron beam at a given position of the sensor 150a, 150b, 250 is determined to be out of size and/or shape, adjustment by the focus lens and/or astigmatism lens may correct for the beam size/shape distortion. X-ray detection and/or secondary electron detection may continue for the position during adjustment until a desired size/shape is achieved. By sweeping the electron beam across the pattern in different directions one may determine the size/shape of the electron beam spot with high accuracy for each and every position said sensors 150a, 150b, 250 may be positioned at.

The use of the sensor attached to said powder distributor opens up for calibration and/or validation of the electron beam at any time during the manufacturing of the three-dimensional article. Calibration and/or validation may not only be made when critical components has been renewed or exchanged in the additive manufacturing machine, such as exchange of electron filament but also at any time during the manufacture of the three-dimensional component, such as after a predetermined number of layers or even between every single layer which is to be fused.

Figure 2b depicts a schematic top view of a second example embodiment of a sensor 150a, 150b, 250 according to the present invention. In this example embodiment, the sensor comprises two slits 222, 223 in the form of a cross in said plate 220. A first slit 222 may be of a first width and a first length and a second slit 223 may be of a second width and a second length. In this type of sensor, the size and shape of the slits may be used for generating signals as the electron beam is swept over it. Calibration/verification may be performed as the electron beam is swept over the edges of the slits by using for instance the above mentioned "knife edge beam profiling method". The plate 220 may be made of Al, Cu or stainless steel.

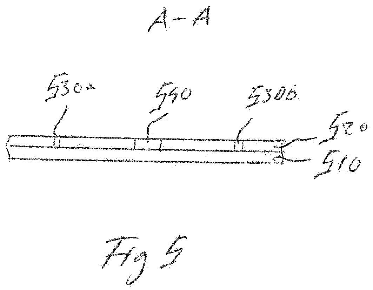

Figure 2c depicts a schematic top view of a third example embodiment of a sensor 150a, 150b, 250 according to the present invention. In this example embodiment, the sensor comprises a lower plate 510 and an upper plate 520 being attached to each other, see figure 5 which is a cross sectional view of figure 2c taken along line A-A. In an alternative embodiment said first and second plates may be attached spaced apart from each other so that the upper and lower plate 510 and 520 respectively are essentially parallel to each other. The upper plate 520 comprises a predetermined number of holes 20 and/or slits. The lower plate 510 may be a solid plate. The lower plate may be made of a material having an atomic number which is different to the material of the upper plate 520. In an example embodiment, the lower plate 510 is made of a material having a higher atomic number than the upper plate 520. Said lower plate may for instance be made of copper or tungsten whereas the upper plate may for instance be made of aluminum or stainless steel.

In case the plates are spaced apart from each other the upper and lower plates may be attached to each other via a plurality of distances which may be fastened to the upper and lower plates via screws or rivets or similar fastening elements. The lower plate 510 may be essentially flat. The upper plate 520 comprises a predetermined number of holes 20 and/or slits.

Inside the holes and/or slits 222 it may be arranged a predetermined hollow pattern.

In a first example embodiment, the slits 222 may be manufactured out of one and the same upper plate 520. The slits 222 may be manufactured through etching.

In a second example embodiment, the upper plate 520 may comprise a first and a second plate, wherein the first plate comprises the predetermined number of holes and/or slits and where the second plate comprises the predetermined hollow pattern. The holes and/or slits 222 may be water cut or drilled. The second plate may be a net having the predetermined pattern or a solid plate having the predetermined pattern only at selected locations aligned with the first plate's holes and/or slits 222. The predetermined pattern is the second plate may be made through etching. The second plate is facing towards the lower plate 510. The second plate may be thinner compared to the first plate. In various example embodiments, the thickness of the second plate is 0.05-0.20mm. In various example embodiments, the thickness of the first plate may be a 1-3cm. In various example embodiments, the diameter of the holes or the width of said slits is about 0.5-2cm.

The predetermined pattern may comprise bars having sharp edges for improving the accuracy of the knife edge beam profiling method which may be used for determining the position, size and shape of the electron beam.

In various example embodiments, a distance between the upper and lower plate may be 5-10 cm.

The second plate may be made of different material compared to the first plate. The second plate may be made of a material having a larger atomic number than the first plate. The second plate may be made of Cu, or W whereas the first plate may be made of Al. The predetermined hollow pattern may be a net with bars crossing each other at a predetermined angle.

The predetermined hollow pattern may be a cross pattern. The cross pattern may have its center in the center of the hole 222. Alternatively, the center of the cross is not aligned with the center of the hole 222.

In various example embodiments, different holes 222 may have different patterns. For instance, a first hole may have a first cross pattern and a second hole 222 may have a second cross pattern. The difference between the cross pattern may be the angles between the cross bars.

Figure 1b depicts a schematic perspective view of first example embodiment of a powder distributor 110 comprising a sensor 150a. The powder distributor may be an elongated rod provided movable at a predetermined distance above the powder bed and with its central axis in parallel with a top surface of the build platform 114. The length of the rod may be longer than the width of the build platform 114 in said build tank 112 in order to make it possible to distribute powder on each position of the build platform 114. The cross section of the elongated rod is in Figure 1b illustrated to be triangular. The cross section may have any shape including but not limited to circular, elliptical, quadratic, rectangular, polygonal etc. The height of the powder distributor 110 may be set in order to give the powder distributor 110 a predetermined mechanical strength in a vertical direction, i.e., with a predetermined and controllable flex in the vertical direction. The height may also be chosen taking into account that the powder distributor 110 has to push forward a predetermined amount of powder. A too small height means that the powder distributor can push forward a smaller amount compared to a higher powder distributor 110. However, a too high powder distributor 110 may complicate the powder catching from a scree of powder, i.e., the higher the height of the powder distributor the more force may be required in order to catch a predetermined amount of powder from the scree of powder by moving the powder distributor into the scree of powder and letting a predetermined amount of powder fall over the top of the powder distributor from a first side in the direction of travel into the scree of powder to a second side in the direction of the powder table. There are other means for catching a predetermined amount of powder than the above-mentioned method of moving the rake into a scree of powder, for instance a powder tank with a movable floor may be used and arranged beside the build platform. By adjusting the height of the floor a predetermined amount of powder may be raked off and provided on the build platform. One or a plurality of flexible plates 140 may be attached to the powder distributor 110. Said sensor may be made of a different material compared to said powder distributor.

## Claims

1. An apparatus (300) for forming at least one three-dimensional article through successive fusion of parts of a powder bed (318), which parts correspond to successive cross sections of the at least one three-dimensional article, said apparatus (300) comprising:
a powder distributor (110, 310) configured for evenly distributing a layer of powder on top of a work table (114, 314) provided inside a vacuum chamber (320); and
an electron beam source emanating an electron beam configured for fusing the powder layer in selected locations corresponding to a cross section of the at least one three-dimensional article; and
at least one detector (304) for detecting x-rays and/or secondary electrons sent out from a sensor (120a, 120b, 150a, 150b, 250) when said sensor (120a, 120b, 150a, 150b, 250) is interacting with said electron beam;
said powder distributor (110, 310) being an elongated rod provided movable at a predetermined distance above the powder bed (318) and with its central axis in parallel with a top surface of said work table (114, 314),
**characterized in that** said sensor is at least one sensor (120a, 120b, 150a, 150b, 250) provided on said powder distributor (110, 310) facing towards said electron beam source, wherein said at least one sensor (120a, 120b, 150a, 150b, 250) is at least one metal plate (220) comprising at least one opening.

2. The apparatus according to claim 1, wherein a hollow pattern (224) is provided in said at least one opening.

3. The apparatus according to claim 2, wherein said hollow pattern (224) is made of a material with a higher atomic number compared to the at least one metal plate (220).

4. The apparatus according to any one of the preceding claims, wherein said at least one sensor (120a, 120b, 150a, 150b, 250) is directly attached to a top surface of said powder distributor (110, 310).

5. The apparatus according to any one of claim 1-3, wherein said at least one sensor (120a, 120b, 150a, 150b, 250) is attached at a predetermined distance above said powder distributor (110, 310).

6. The apparatus according to any one of claim 1-5, wherein said at least one metal plate (220) is made of a different material compared to said powder distributor (110, 310).

7. The apparatus according to any one of the preceding claims, wherein said at least one sensor (120a, 120b, 150a, 150b, 250) is arranged movable along the central axis of said powder distributor (110,310).

8. The apparatus according to any one of the preceding claims, wherein said at least one sensor (120a, 120b, 150a, 150b, 250) is arranged movable in a direction perpendicular to the work table (114,314).

9. A method for forming at least one three-dimensional article through successive fusion of parts of a powder bed (318), which parts correspond to successive cross sections of the at least one three-dimensional article, said method comprising the steps of:
distributing evenly a layer of powder on top of a work table (114, 314) with a powder distributor (110, 310);
applying an electron beam from an electron beam source for fusing the layer of powder in selected locations corresponding to a cross section of the at least one three-dimensional article; and **characterized by**
detecting with at least one detector (304) x-rays and/or secondary electrons emanating from an interaction of said electron beam with a sensor (120a, 120b, 150a, 150b, 250) attached to said powder distributor (110, 310), wherein said sensor (120a, 120b, 150a, 150b, 250) is a metal plate (220) comprising at least one opening facing towards said electron beam source.

10. The method according to claim 9, wherein said x-rays and/or said secondary electrons emanating from said interaction of said electron beam with said sensor (120a, 120b, 150a, 150b, 250) are detected while said powder distributor (110, 310) is moving.

11. The method according to claim 9 or 10, wherein said x-rays and/or said secondary electrons emanating from said interaction of said electron beam with said sensor (120a, 120b, 150a, 150b, 250) are detected at a plurality of predetermined positions of said powder distributor (110, 310).

12. The method according to claim 11, wherein said x-rays and/or said secondary electrons are detected at said plurality of predetermined positions when said powder distributor (110, 310) is standing still.

13. The method according to any one of claim 9-12, wherein said detection of said x-rays and/or secondary electrons emanating from said interaction of said electron beam with said sensor (120a, 120b, 150a, 150b, 250) is performed while distributing said layer of powder on top of said work table (114, 314).

14. The method according to any one of claim 9-12, wherein said detection of said x-rays and/or said secondary electrons emanating from said interaction of said electron beam with said sensor (120a, 120b, 150a, 150b, 250) is performed after a powder layer has been fused and before a new powder layer is to be distributed.

## Patentansprüche

1. Vorrichtung (300) zum Bilden mindestens eines dreidimensionalen Werkstücks durch aufeinanderfolgendes Verschmelzen von Teilen eines Pulverbetts (318), wobei die Teile aufeinanderfolgenden Querschnitten des mindestens einen dreidimensionalen Werkstücks entsprechen, wobei die Vorrichtung (300) umfasst:
einen Pulververteiler (110, 310), der so konfiguriert ist, dass er eine Pulverschicht gleichmäßig auf der Oberseite eines Arbeitstisches (114, 314) verteilt, der innerhalb einer Vakuumkammer (320) vorgesehen ist; und
eine Elektronenstrahlquelle, die einen Elektronenstrahl aussendet, der zum Verschmelzen der Pulverschicht an ausgewählten Stellen entsprechend einem Querschnitt des mindestens einen dreidimensionalen Werkstücks konfiguriert ist; und
mindestens einen Detektor (304) zum Erfassen von Röntgenstrahlen und/oder Sekundärelektronen, die von einem Sensor (120a, 120b, 150a, 150b, 250) ausgesandt werden, wenn der Sensor (120a, 120b, 150a, 150b, 250) mit dem Elektronenstrahl wechselwirkt:
wobei der Pulververteiler (110, 310) ein länglicher Stab ist, der in einem festgelegten Abstand über dem Pulverbett (318) beweglich angebracht ist und dessen Mittelachse parallel zu einer oberen Fläche des Arbeitstisches (114,314) verläuft, **dadurch gekennzeichnet, dass** der Sensor mindestens ein Sensor (120a, 120b, 150a, 150b, 250) ist, der an dem Pulververteiler (110, 310) angebracht und der Elektronenstrahlquelle zugewandt ist, worin der mindestens eine Sensor (120a, 120b, 150a, 150b, 250) mindestens eine Metallplatte (220) ist, die mindestens eine Öffnung umfasst.

2. Vorrichtung nach Anspruch 1, worin ein ausgehöhltes Muster (224) in der mindestens einen Öffnung angebracht ist.

3. Vorrichtung nach Anspruch 2, worin das ausgehöhlte Muster (224) aus einem Material mit einer höheren Ordnungszahl im Vergleich zu der mindestens einen Metallplatte (220) hergestellt ist.

4. Vorrichtung nach einem der vorangegangenen Ansprüche, worin der mindestens eine Sensor (120a, 120b, 150a, 150b, 250) direkt an einer oberen Fläche des Pulververteilers (110, 310) angebracht ist.

5. Vorrichtung nach einem der Ansprüche 1-3, worin der mindestens eine Sensor (120a, 120b, 150a, 150b, 250) in einem festgelegten Abstand über dem Pulververteiler (110, 310) angebracht ist.

6. Vorrichtung nach einem der Ansprüche 1-5, worin die mindestens eine Metallplatte (220) aus einem anderen Material als der Pulververteiler (110, 310) besteht.

7. Vorrichtung nach einem der vorangegangenen Ansprüche, worin der mindestens eine Sensor (120a, 120b, 150a, 150b, 250) entlang der Mittelachse des Pulververteilers (110, 310) beweglich angeordnet ist.

8. Vorrichtung nach einem der vorangehenden Ansprüche, worin der mindestens eine Sensor (120a, 120b, 150a, 150b, 250) in einer Richtung senkrecht zum Arbeitstisch (114, 314) beweglich angeordnet ist.

9. Verfahren zum Bilden mindestens eines dreidimensionalen Werkstücks durch aufeinanderfolgendes Verschmelzen von Teilen eines Pulverbetts (318), wobei die Teile aufeinanderfolgenden Querschnitten des mindestens einen dreidimensionalen Werkstücks entsprechen, wobei das Verfahren die folgenden Schritte umfasst:
Gleichmäßiges Verteilen einer Pulverschicht auf einem Arbeitstisch (114, 314) mit einem Pulververteiler (110, 310);
Bestrahlen mit einem Elektronenstrahl aus einer Elektronenstrahlquelle zum Verschmelzen der Pulverschicht an ausgewählten Stellen, die einem Querschnitt des mindestens einen dreidimensionalen Werkstücks entsprechen; und **gekennzeichnet durch**
Mittels mindestens einem Detektor (304) Erfassung von Röntgenstrahlen und/oder Sekundärelektronen, die aus einer Wechselwirkung des Elektronenstrahls mit einem an dem Pulververteiler (110, 310) angebrachten Sensor (120a, 120b, 150a, 150b, 250) stammen, worin der Sensor (120a, 120b, 150a, 150b, 250) eine Metallplatte (220) ist, die mindestens eine Öffnung umfasst, die der Elektronenstrahlquelle zugewandt ist.

10. Verfahren nach Anspruch 9, worin die Röntgenstrahlen und/oder die Sekundärelektronen, die von der Wechselwirkung des Elektronenstrahls mit dem Sensor (120a, 120b, 150a, 150b, 250) herrühren, erfasst werden, während sich der Pulververteiler (110, 310) bewegt.

11. Verfahren nach Anspruch 9 oder 10, worin die Röntgenstrahlen und/oder die Sekundärelektronen, die von der Wechselwirkung des Elektronenstrahls mit dem Sensor (120a, 120b, 150a, 150b, 250) herrühren, an einer Vielzahl von festgelegten Positionen des Pulververteilers (110, 310) detektiert werden.

12. Verfahren nach Anspruch 11, worin die Röntgenstrahlen und/oder die Sekundärelektronen an der Vielzahl der festgelegten Positionen detektiert werden, wenn der Pulververteiler (110, 310) stillsteht.

13. Verfahren nach einem der Ansprüche 9-12, worin die Detektion der Röntgenstrahlen und/oder Sekundärelektronen, die aus der Wechselwirkung des Elektronenstrahls mit dem Sensor (120a, 120b, 150a, 150b, 250) herrühren, durchgeführt wird, während die Pulverschicht auf der Oberseite des Arbeitstisches (114, 314) verteilt wird.

14. Verfahren nach einem der Ansprüche 9-12, worin die Detektion der Röntgenstrahlen und/oder der Sekundärelektronen, die aus der Wechselwirkung des Elektronenstrahls mit dem Sensor (120a, 120b, 150a, 150b, 250) herrühren, durchgeführt wird, nachdem eine Pulverschicht verschmolzen wurde und bevor eine neue Pulverschicht verteilt wird.

## Revendications

1. Appareil (300) pour la formation d'un article tridimensionnel par fusions successives de parties d'un lit de poudre (318), lesquelles parties correspondant à des sections transversales successives de l'au moins un article tridimensionnel, ledit appareil (300) comprenant :
un distributeur de puissance (110, 310) conçu pour distribuer de façon régulière une couche de poudre sur une table de travail (114, 314) disposée à l'intérieur d'une chambre à vide (320) ; et
une source de faisceau d'électrons émettant un faisceau d'électrons conçu pour faire fondre la couche de poudre en des endroits choisis correspondant à une section transversale de l'au moins un article tridimensionnel ; et
au moins un détecteur (304) pour détecter des rayons X et/ou des électrons secondaires émis depuis un capteur (120a, 120b, 150a, 150b, 250) quand ledit capteur (120a, 120b, 150a, 150b, 250) interagit avec ledit faisceau d'électrons :
ledit distributeur de puissance (110, 310) étant une tige allongée fournie mobile à une distance prédéterminée au-dessus du lit de poudre (318) et avec son axe central parallèle à une surface supérieure de ladite table de travail (114, 314), **caractérisé en ce que** ledit capteur est au moins un capteur (120a, 120b, 150a, 150b, 250) fourni sur ledit distributeur de puissance (110, 310) tourné vers ladite source de faisceau d'électrons, ledit au moins un capteur (120a, 120b, 150a, 150b, 250) étant au moins une plaque de métal (220) comprenant au moins une ouverture.

2. Appareil selon la revendication 1, dans lequel un motif creux (224) est disposé dans ladite au moins une ouverture.

3. Appareil selon la revendication 2, dans lequel ledit motif creux (224) est constitué d'un matériau avec un numéro atomique plus élevé que l'au moins une plaque de métal (220).

4. Appareil selon l'une quelconque des revendications précédentes, dans lequel ledit au moins un capteur (120a, 120b, 150a, 150b, 250) est directement attaché à une surface supérieure dudit distributeur de puissance (110, 310).

5. Appareil selon l'une quelconque des revendications 1 à 3, dans lequel ledit au moins un capteur (120a, 120b, 150a, 150b, 250) est attaché à une distance préterminée au-dessus dudit distributeur de puissance (110, 310).

6. Appareil selon l'une quelconque des revendications 1 à 5, dans lequel ladite au moins une plaque de métal (220) est constituée d'un matériau différent dudit distributeur de puissance (110, 310).

7. Appareil selon l'une quelconque des revendications précédentes, dans lequel ledit au moins un capteur (120a, 120b, 150a, 150b, 250) est disposé de façon mobile le long de l'axe central dudit distributeur de puissance (110, 310).

8. Appareil selon l'une quelconque des revendications précédentes, dans lequel ledit au moins un capteur (120a, 120b, 150a, 150b, 250) est disposé de façon mobile dans une direction perpendiculaire à la table de travail (114, 314).

9. Procédé de formation d'un article tridimensionnel par fusions successives de parties d'un lit de poudre (318), lesquelles parties correspondant à des sections transversales successives de l'au moins un article tridimensionnel, ledit procédé comprenant les étapes consistant à :
distribuer de façon régulière une couche de poudre sur une table de travail (114, 314) avec un distributeur de poudre (110, 310) ;
appliquer un faisceau d'électrons depuis une source de faisceau d'électrons pour faire fondre la couche de poudre en des endroits choisis correspondant à une section transversale de l'au moins un article tridimensionnel ; et **caractérisé par**
la détection par l'au moins un capteur (304) de rayons X et/ou d'électrons secondaires émanant d'une interaction dudit faisceau d'électrons avec un capteur (120a, 120b, 150a, 150b, 250) attaché audit distributeur de puissance (110, 310), ledit capteur (120a, 120b, 150a, 150b, 250) étant une plaque de métal (220) comprenant au moins une ouverture orientée vers ladite source de faisceau d'électrons.

10. Procédé selon la revendication 9, dans lequel lesdits rayons X et/ou lesdits électrons secondaires émanant de ladite interaction dudit faisceau d'électrons avec ledit capteur (120a, 120b, 150a, 150b, 250) sont détectés pendant que ledit distributeur de puissance (110, 310) se déplace

11. Procédé selon la revendication 9 ou 10, dans lequel lesdits rayons X et/ou lesdits électrons secondaires émanant de ladite interaction dudit faisceau d'électrons avec ledit capteur (120a, 120b, 150a, 150b, 250) sont détectés en une pluralité de positions prédéterminées dudit distributeur de puissance (110, 310).

12. Procédé selon la revendication 11, dans lequel lesdits rayons X et/ou lesdits électrons secondaires sont détectés à ladite pluralité de positions prédéterminées quand ledit distributeur de puissance (110, 310) est immobile.

13. Procédé selon l'une quelconque des revendications 9 à 12, dans lequel ladite détection de rayons X et/ou lesdits électrons secondaires émanant de ladite interaction dudit faisceau d'électrons avec ledit capteur (120a, 120b, 150a, 150b, 250) est effectuée pendant ladite distribution de poudre au sommet de ladite table de travail (114, 314).

14. Procédé selon l'une quelconque des revendications 9 à 12, dans lequel ladite détection de rayons X et/ou lesdits électrons secondaires émanant de ladite interaction dudit faisceau d'électrons avec ledit capteur (120a, 120b, 150a, 150b, 250) est effectuée après qu'une couche de poudre ait été fondue et avant qu'une nouvelle couche de poudre ait été distribuée.
